(19)

Europäisches
Patentamt
European
Patent Office
Office européen
des brevets

(11) **EP 2 787 453 A1**

(12) **EUROPEAN PATENT APPLICATION**

(43) Date of publication:
08.10.2014 Bulletin 2014/41

(51) Int Cl.:
*G06F 17/30* (2006.01)

(21) Application number: 13162170.8

(22) Date of filing: 03.04.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens AG Österreich
1210 Wien (AT)**

(72) Inventors:
• **Polleres, Axel, Dr.**
**2103 Langenzersdorf (AT)**
• **Bischof, Stefan**
**1080 Wien (AT)**

(74) Representative: **Maier, Daniel Oliver**
**Siemens AG**
**Postfach 22 16 34**
**80506 München (DE)**

(54) **Computer implemented method for integrating data from the Web from different sources by using SPARQL**

(57)     Computer implemented method for integrating data from the Web from different sources by using SPARQL, a query language able to retrieve and manipulate data stored in Resource Description Framework (RDF), possibly including schema information in RDF Schema (RDFS).

The invention concerns an computer implemented method for integrating data from the Web from different sources by using SPARQL, comprising:
- arithmetic equation axioms, which extend Resource Description Framework Schema (RDFS) and its semantics
- a query rewriting algorithm that returns for SPARQL queries not only explicit, but also implicit results that consider not only the RDFS semantics but also the knowledge encoded in equations
- conditions under which complete results can be delivered.

**Description**

Computer implemented method for integrating data from the Web from different sources by using SPARQL, a query language able to retrieve and manipulate data stored in Resource Description Framework (RDF), possibly including schema information in RDF Schema (RDFS).

When integrating data from the Web from different sources, the Resource Description framework (RDF) is a standard to represent this data in a schemaless fashion, such that it can be integrated and stored in a unified manner. Implicit information and schema information in RDF is represented through ontologies, which mainly allow to model taxonomic reasoning about class membership and within a hierarchy of roles (properties) using languages such as RDFS (RDF Schema) and OWL (Web Ontology Language). However, a lot of implicit knowledge within real world RDF data cannot be modeled using RDFS and OWL alone.

As an example, data about cities from various open data sources are very often composed of numeric attribute-value pairs which likewise contains a lot of implicit information, such as functional dependencies between attribute values expressible in the form of simple mathematical equations, which are called "attribute equations".

Such dependencies include simple unit conversions (e.g. between Fahrenheit and Celsius), or functional dependencies, such as the population density that can be computed from a total population and area.

The focus of this invention is to provide a flexible framework that treats attribute equations in combination with ontological knowledge modeled in OWL and RDFS.

According to the invention, this problem is solved with a computer implemented method according to claim 1.

The problem shall be illustrated with examples and a figure which shows a flowchart of the method.

The examples apply to sample RDF data about cities, aggregated from sources such as DBPedia or Eurostat. It may contain data of various levels of completeness and using numerical attributes based on different units like :Jakarta :tempHighC 33. :New_York :tempHighF 84. :New_York:population 8244910. :New_York :area_mile 2468.5. :Vienna :population 1714142. :Vienna :area $_{km2}$ 414.6. :Vienna :populationDensity 4134 ....

Users familiar with SPARQL might expect to be able to ask for the population density, or for places with temperatures over 90°F with queries like
SELECT ?C ?P WHERE { ?C :populationDensity ?P } or
SELECT ?C WHERE { ?C :tempHighF ?TempF FILTER(?TempF > 90) }

However, implicit answers from mathematical knowledge such as the following equations would not be returned by those queries:

$$\texttt{tempHighC = (tempHighF - 32)} \cdot \texttt{5/9}$$

populationDensity = population ÷ area$_{km2}$

One might ask why such equations cannot be directly added to the terminological knowledge modeled in ontologies? From state of the art we know, that rule-based extensions of ontology languages such as SWRL (Semantic Web Rule Language), as described in http://www.w3.org/Submission/SWRL/, allow to encode such equations as follows:

$$(1) \quad tempHighC(X,C) \Leftarrow tempHighF(X, F), C = (F - 32) \cdot 5/9$$

$$(2) \quad populationDensity(X,PD) \Leftarrow population(X, P), area_{km2}(X,A), PD = P \div A$$

However, existing engines that support SWRL and SPARQL can still not answer SPARQL queries such as the above ones correctly, since

(i) rule (1) is in the "wrong direction" for the query, that is, it would need different variants of the rule for converting from *tempHighC* to *tempHighF* and vice versa;
(ii) the above rules are not DL safe as described in http://clarkparsia.com/pellet/faq/rules/, which leads to termination problems in rule-based engines.

Rules such as the ones above could be similarly encoded in engines such as Jena Rules http://jena.apache.org/documentation/inference/index.html as follows:

[(?city :area ?ar) (?city :population ?p)
quotient(?p, ?ar, ?pd)
-> (?city :populationDensity ?d)]

However,

(iii) similar termination problems as above in SWRL would occur and likewise different variants of the same rule would be necessary, and
(iv) in the general case built-ins such as quotient(?p, ?ar, ?pd) would fail due to division by zero, such that additional care would be needed when formulating these rules.

In the known state of the art there is no system or generic technique which allows to answer SPARQL queries such as the one shown above that

a) returns answers that take into consideration equational knowledge formulated in a declarative manner
b) is able to deal with incomplete or partially inconsistent data without termination problems

According to the invention the problem is solved by

- extending the ontology language RDFS and its semantics by arithmetic equation axioms
- providing a sound query rewriting algorithm that returns for SPARQL queries not only explicit, but also implicit results that consider not only the RDFS semantics but also the knowledge encoded in equations,
- and defining sufficient conditions (attribute-acyclicity and data-coherence) under which the method delivers complete results.

In order to enable modeling equations in ontology languages it is allowed to model terminological schema knowledge in RDFS (using rdfs:subclassOf, rdfs:subPropertyOf, rdfs:domain, rdfs:range) along with equations which are encoded in RDF using a new property definedByEquation, along with Data in RDF such as the one modeled in the Example. As usual, terminological schema knowledge is called the "TBox", and assertional knowledge in the form of data the "ABox".

In addition to the sample ABox Data in RDF from above, a corresponding TBox including attribute equations is given as follows in Table 1: as usual for terminological knowledge, apart from the encoding in RDF, the last three terminological axioms are given in declarative Description Logics notation, whereas equations are written down as arithmetic equations (as opposed to rules).

Table 1

| Terminological Axioms in declarative notation | Encoding in RDF |
| --- | --- |
| :tempHighC = (:tempHighF - 32) $\cdot$ 5 $\div$ 9 | :tempHighC :**definedByEquation** "(:tempHighF - 32) $\cdot$ 5 $\div$ 9" |
| :populationRateMale = :populationMale $\div$ :population | :populationRateMale :**definedByEquation** ":populationMale $\div$ :population" |
| :populationRateFemale = :populationFemale $\div$ :population | :populationRateFemale :**definedByEquation** " :populationFemale $\div$ :population" |
| :area_km2 = :area_m2 $\div$ 1000000 | :area_km2 :**definedByEquation**" :area_m2 $\div$ 1000000" |
| :area_km2 = :area_mile2 $\div$ 2.589988110336 | :area_km2 :**definedByEquation** " :area_mile2 $\div$ 2.589988110336" |
| :populationDensity = :population :area_km2 | :populationDensity :**definedByEquation**" :population $\div$ :area_km2" |
| :City $\subseteq$ :Location | :City rdfs:subClassOf :Location |

(continued)

| Terminological Axioms in declarative notation | Encoding in RDF |
|---|---|
| foaf:name $\subseteq$ rdfs:label | foaf :name rdfs:subPropertyOf rdfs:label |
| dbpedia:name $\subseteq$ rdfs:label | dbpedia:name rdfs:subPropertyOf rdfs:label |

In general, a TBox consisting of description logics axioms and equations, as well as ABox knowledge can be encoded in RDF as per Table 2. It is considered here a lightweight Description Logic that is sufficient to cover the semantics of the RDFS features.

Table 2

| | DL notation | RDFS |
|---|---|---|
| 1 | $A_1 \subseteq A_2$ | $A_1$ rdfs : subclassOf $A_2$ |
| 2 | $\exists P \subseteq A$ | P rdfs: domain A |
| 3 | $\exists P^- \subseteq A$ | P rdfs: range A |
| 4 | $\exists U \subseteq A$ | Urdfs:domainA |
| 5 | $P_1 \subseteq P_2$ | $P_1$ rdfs:subPropertyOf $P_2$ |
| 6 | $U_1 \subseteq U_2$ | $U_1$ rdfs:subPropertyOf $U_2$ |
| 7 | $U_0 = f(U_1, ..., U_n)$ | $D_0$ definedByEquation "f($U_1$, ..., $U_n$)" |
| 8 | $A(x)$ | x rdf:type A |
| 9 | $R(x, y)$ | x R y |
| 10 | $U(x, q)$ | x U "$q$" ^^ow):rational |

Line 7 in Table 2 is a simple equation where all variable names are attributes. Such equations are defined as follows:

**Definition 1**. *Let x $\langle(x_1,... , x_n\rangle$ be a sequence of variables. A simple equation E is an algebrac equation of the form $x_0 = f(x_1, ..., x_n)$ such that f(x) is an arithmetic expression over numerical constants and variables in x where f uses the elementary algebraic operators +, -, ., $\div$ and contains each $x_i$ exactly once. vars (E) is the set of variables $\{ x_0, ..., x_n\}$ appearing in E.*

That means, non-polynomials for *f* - since divisions are allowed - but not for exponents for any variables; such equations can be solved uniquely for each $x_i$ by only applying elementary transformations, assuming that all $x_j$ for $j != i$ are known, i.e. for each $x_i$, such that $2 \leq i \leq n$, an equivalent equation $E'$ of the form $x_i = f'(x_1, ... , x_{i-1}, X, x_{i+1}, ..., X_n)$ is uniquely determined. Note that since each variable occurs only once, the standard procedure for solving single variable equations can be used, for example *solve* $(x_1 = f(x_2, ..., x_n), x_i)$ to denote *E'*.

Semantically, the usual semantics of Description Logics models is extended by considering simple equations as axioms.

For an equation axiom E: $U_0 = f(U_1, ..., U_n)$ for any $U_i$ with $0 \leq i \leq n$ the equation axiom *solve* (E, Ui) is called the $U_i$-variant of E.

**Definition 6 (Model).** *An interpretation I Satisfies an axiom of the form*

- $C \subseteq A$ *if* $C^I \subseteq A^I$

- $P_1 \subseteq P_2$ *if* $P_2^{\mathcal{I}}$

- $U_1 \subseteq U_2$ *if* $U_1^{\mathcal{I}} \subseteq U_2^{\mathcal{I}}$
  -$U_0 = f(U_1, ..., U_n)$ *if*

  $\forall x, y_1,....y_n \ U_i^{\mathcal{I}})\Lambda$ defined($f(U_1/y_1, ..., U_n/y_n)$

  $\Rightarrow (x, eval(f(U_1/y_1, ..., U_n/y_n)) \in U_0^{\mathcal{I}}$

  *where, by* eval($f(U_1/y_1, ..., Un/yn)$) *we denote the actual value in* Q *from evaluating the arithmetic expression f($U_1$, ..., $U_n$) after substituting each $U_i$ with $y_i$, and by defined ($f(U_1/y_1, ..., U_n/y_n)$) we denote that this value is actually defined*

*(i.e., does not contain a division by zero).* *Analogously, I satisfies an ABox assertion of the form*

- *$C(a)$ if $a^I \in C^I$*
- *$P(a, b)$ if $(a^I, b^I) \in P^I$*
- *$U(a, q)$ if $(a^I, q) \in U^I$*

*Finally, an interpretation I is called a* model *of a KB K = (T, A), written I |= K, if I satisfies all (role, attribute and concept) inclusion axioms in T, all* variants *of equation axioms in T, and all assertions in A.*

According to the invention, implicit answers by equations and RDFS /DL axioms and ABox data given in RDF for SPARQL can be given.

For this purpose, arbitrary SPARQL queries are considered where

- all Basic graph patterns BGP - for definition of SPARQL see http://www.w3.org/TR/sparq111-query/ - are rewritten to conjunctive queries CQ, i.e. a conjunctive query from each basic graph pattern P is extracted, where all triples that correspond to any of the forms in Table 2 are mapped to a conjunctive query a (non-distinguished-variable-free) conjunctive query of the form $qP$: $q(vars(P)) \leftarrow \varphi(P)$, where vars $(P)$ is the set of variables occurring in $P$. Triples not mappable to any of the forms in Table 2 (e.g. triples with a variable in the predicate position) are kept as they are.
- The conjunctive queries obtained in this way, are rewritten with respect to a TBox **T** to a UNION of conjunctive queries UCQ by the algorithm PerfectRef$_E$ shown in Algorithm 1.
- The original Basic graph patterns BGP that have been rewritten into conjunctive queries CQ are replaced by SPARQL graph patterns obtained from translating back the results from the algorithm PerfectRef$_E$ into SPARQL by means
  ○ the translation function $tr()$ outlined in Table 3 below, where it is assumed that PerfectRef$_E$ $(qP, T) = \{q_1, \ldots q_m\}$.

---

**Algorithm 1:** Rewriting algorithm PerfectRef$_E$

**Input:** Conjunctive query $q$, TBox $\mathcal{T}$
**Output:** Union (set) of conjunctive queries

1 $P := \{q\}$
2 **repeat**
3    $P' := P$
4    **foreach** $q \in P'$ **do**
5       **foreach** $g$ *in* $q$ **do** expansion
6          **foreach** *inclusion axiom* $I$ *in* $\mathcal{T}$ **do**
7             **if** $I$ *is applicable to* $g$ **then**
8                $P := P \cup \{q[g/\operatorname{gr}(g, I)]\}$
9          **foreach** *equation axiom* $E$ *in* $\mathcal{T}$ **do**
10             **if** $g = U^{\operatorname{adn}(g)}(x, y)$ *is an (adorned) attribute atom and* $\operatorname{vars}(E) \cap \operatorname{adn}(g) = \emptyset$ **then**
11                $P := P \cup \{q[g/\operatorname{expand}(g, E)]\}$
12 **until** $P' = P$
13 **return** $P$

---

**Table 2.** Semantics of gr($g$, $I$) of Algorithm 1

| $g$ | $I$ | gr($g$/$I$) |
|---|---|---|
| $A(x)$ | $B \subseteq A$ | $B(x)$ |
| | $\exists P \subseteq A$ | $P(x, \_)$ |
| | $\exists P^- \subseteq A$ | $P(\_, x)$ |
| | $\exists U \subseteq A$ | $U(x, \_)$ |
| $P_1(x, y)$ | $P_1 \subseteq P_2$ | $P_2(x, y)$ |
| $U_1^{\operatorname{adn}(g)}(x, y)$ | $U_1 \subseteq U_2$ | $U_2^{\operatorname{adn}(g)}(x, y)$ |

Table 3 shows how to translate the result of Algorithm 1 back to SPARQL

Table 3

| tr({$q_1, ... q_m$}) | { tr($q_1$) } UNION ... UNION {tr($q_m$) } |
|---|---|
| tr($\Lambda_j = 0^{ki}$ $atom_j$) | tr($atom_1$) ....tr($atom_{ki}$) |
| tr($A(x)$) | tr($x$) rdf : type $A$ |
| tr($P(x, y)$) | tr($x$) P tr($y$) |
| tr($U(x, y)$) | tr($x$) U tr($y$) |
| tr($y = f(y_1, ..., y_n)$) | BIND(f(tr($y_1$), ..., tr($y_n$)) AS tr($y$) ) |
| tr($x$), for x $\in V$ | ?$x$ |
| tr($x$), for x $\in \Gamma$ | $x$ |
| tr($x$), for x $\in Q$ | "$x$"^^owl: rational |

The algorithm PerfectRef$_E$ as shown in table Algorithm 1 extends the regular PerfectRef query rewriting algorithm by dealing with equation axioms. The actually new part of PerfectRefE that reformulates attribute atoms in terms of equation axioms is in lines 9-11. In order to avoid infinite expansion of equation axioms during the rewriting, the algorithm "adorns" attribute atoms in a conjunctive query CQ by a set of attribute names. That is, given an attribute atom $U(x, z)$ and a set of attribute names {$U_1, ..., , U_k$} $g = U^{U1, ..., Uk} (x, z)$ is called an adorned attribute atom and it is written adn($g$) = {$U1, ... ,Uk$} to denote the set of adornments.

The function expand ($g,E$) returns for $g = U^{adn (g)} (x, y)$ and $E' : U = f(U_1, ... ,U_n)$ being the $U$-variant of $E$ the following conjunction:

$$U_1^{\text{adn}(g)\cup\{U\}}(x,y_1) \wedge \ldots \wedge U_n^{\text{adn}(g)\cup\{U\}}(x,y_n) \wedge y = f(y_1,\ldots,y_n)$$

Here, the condition vars ($E$) $\cap$ adn ($g$) = Ø ensures that $U$ is not "re-used" during expansion to compute its own value recursively. The adornment thus prohibits infinite expansion.

A further example:

Take the example TBox consisting of the following single equation axiom:

> :*population* = :*populationFemale* + :*populationMale*

Along with the SPARQL query asking for Cities with a population > 1000000 people:

**SELECT** ?X **WHERE {**?C:population?X **FILTER (**?X > 1000000**)}**

The query corresponding to the Basic graph pattern (BGP) {?C :population ?X } is translated to
$q(c,x) \leftarrow$ population ($c$, $x$),
and given as input to Algorithm 1, the result is translated back into the rewritten query

```
SELECT ?X WHERE {

  {{ ?C :population ?X } UNION

  {:o1 :populationFemale?X2.:o1 :populationMale ?X3.  BIND(?X2+?X3 AS ?X )}}

                  FILTER (?X > 1000000)}
```

The method, in the general case does not return complete results. So that results can be infinite in the general case, if it is considered for instance the equation axioms

Att1 = Att2 +1
Att2 = Att1

Rule based approaches would typically not terminate for equations like this, i.e. when translating them to a rule as follows:

Att1 (X, Z) $\Leftarrow$ Att2 (X, Y), Z = Y+1.

Att2 (X, Z) $\Leftarrow$ Att1 (X, Y).

A sufficient condition for finiteness is when

- equation axioms and attribute inclusion axioms of the form Att1 $\subseteq$ Att2 are acyclic.
- the ABox is consistent with the equations in the sense that no two different values can be derived from the data and the equations

This condition can be checked by means of algorithm PerfectRef$_E$ itself in the following sense:

$$\text{ASK } \{\{ \text{ tr(PerfectRef}_E(q_{P_1}, \mathcal{T})) \text{ FILTER}( ?Y_1 \mathrel{!=} ?Z_1) \}$$

$$\text{UNION}$$

$$. . .$$

$$\text{UNION}$$

$$\{ \text{ tr(PerfectRef}_E(q_{P_m}, \mathcal{T})) \text{ FILTER}( ?Y_1 \mathrel{!=} ?Z_1) \} \}$$

where the $P_i$ are Basic graph patterns BGP of the form { ?X *ui* ?Y1 . ?X *ui* ?Z2 } for each numerical attribute $u_i$ occurring in equation axioms.

If the SPARQL ASK query constructed this way returns "no" then the results for SPARQL queries under the rewriting explained above are complete.

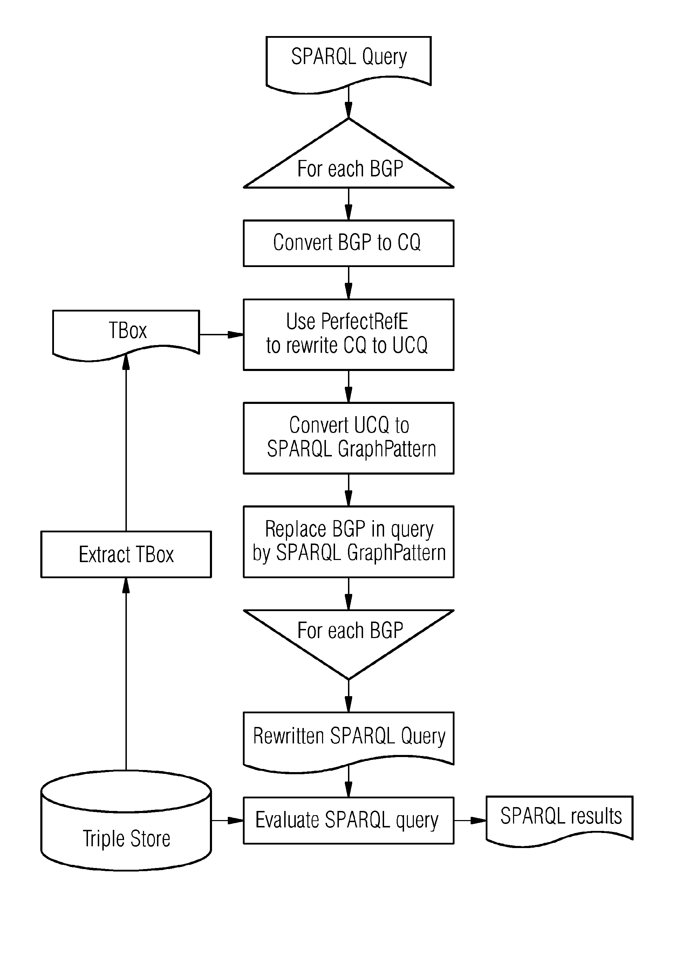

The method is further illustrated by the enclosed figure which shows a flowchart of an SPARQL Query according to the invention.

**Claims**

1. Computer implemented method for integrating data from the Web from different sources by using SPARQL, a query language able to retrieve and manipulate data stored in Resource Description Framework Schema(RDFS) comprising:

   - arithmetic equation axioms, which extend Resource Description Framework Schema (RDFS) and its semantics
   - a query rewriting algorithm that returns for SPARQL queries not only explicit, but also implicit results that consider not only the RDFS semantics but also the knowledge encoded in equations
   - conditions under which complete results can be delivered.

## EUROPEAN SEARCH REPORT

Application Number

EP 13 16 2170

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Carlos R Osuna ET AL: "SPARQL Query Splitter: query translation between different contexts", , 11 September 2009 (2009-09-11), pages 320-323, XP055097052, JISBD 2009, San Sebastián, Spain, September 8-11, 2009 Retrieved from the Internet: URL:www.tdg-seville.info/Download.ashx?id=257 [retrieved on 2014-01-17] * page 321 - page 322 * | 1 | INV. G06F17/30 |
| T | STEFAN BISCHOF ET AL: "RDFS with Attribute Equations via SPARQL Rewriting", 26 May 2013 (2013-05-26), THE SEMANTIC WEB: SEMANTICS AND BIG DATA, SPRINGER BERLIN HEIDELBERG, BERLIN, HEIDELBERG, PAGE(S) 335 - 350, XP047029021, ISBN: 978-3-642-38287-1 * the whole document * | 1 | |

TECHNICAL FIELDS SEARCHED (IPC)

G06F

The present search report has been drawn up for all claims

| Place of search | Date of completion of the search | Examiner |
|---|---|---|
| Munich | 20 January 2014 | Michalski, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)